# EUROPEAN PATENT APPLICATION

(11) **EP 4 840 677 A1**
(43) Date of publication of application: **18.11.2026**
(21) Application number: 26176415.3
(22) Date of filing: 05.05.2026
(51) Int. Cl.: B60L 53/22, H02J 50/00

(54) **WIRELESS CHARGER BRACKET FOR AN ELECTRIC VEHICLE**

(30) Priority: 13.05.2025 US 202519206147
(71) Applicant: FCA US LLC, Auburn Hills, MI 48326-2766 (US)
(72) Inventor: SHOLINGAR, Janakiram, Troy, 48085 (US); RAMANJANA REDDY, Jashwanth, Rochester Hills, 48307 (US); JABOO, Kalid, Tecumseh, N8N 4M9 (CA); STAHMER, ERIC, SHELBY TOWNSHIP, 48316 (US); STAHMER, Eric, Shelby Township, 48316 (US)
(74) Representative: VATD

(57) **Abstract**

A bracket for a vehicle (10) includes a base having a first edge and a second edge opposite the first edge. The first edge has a first wall extending therefrom. The second edge has a second wall extending therefrom. A first flange extends from the first wall and a second flange extending from the second wall. A slot has a first portion disposed through the first wall and a second portion disposed in the second wall.

## Description

### FIELD

The present disclosure relates to wireless charging for an electric vehicle, and, more specifically, to support bracket for coupling a wireless charger to the underside of a vehicle.

### BACKGROUND

This section provides background information related to the present disclosure which is not necessarily prior art.

Electric vehicles are often charged using an external charge port located on the side of the vehicle. However, it is becoming more popular to provide wireless charging for electric vehicles. To provide wireless charging, a wireless charger is secured to the underside of the vehicle. A bracket may be used to secure the wireless charger beneath the vehicle.

During frontal crash events, barrier loading causes the electric components to move rearward relative to the vehicle. Providing a wireless charging beneath the vehicle may cause the wireless charger to move in the longitudinal direction of the vehicle. Other components are also located beneath the vehicle including the battery housing and the electrical distribution module. These components have high voltage wires for which it is desirable for them not to compromised.

### SUMMARY

This section provides a general summary of the disclosure and is not a comprehensive disclosure of its full scope or all of its features.

The present system provides a bracket for a wireless charger coupled to the bottom of the vehicle that prevents high voltage wire connector interaction and high voltage cable pinching during a frontal crash event.

In one aspect of the disclosure, a bracket for a vehicle includes a base having a first edge and a second edge opposite the first edge. The first edge has a first wall extending therefrom. The second edge has a second wall extending therefrom. A first flange extends from the first wall and a second flange extending from the second wall. A slot has a first portion disposed through the first wall and a second portion disposed in the second wall.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Fig. 1 is an underside view of a vehicle.
Fig. 2 is a topside view of the vehicle having a bracket holding a wireless charger.
Fig. 3A is a perspective view of the bracket of Fig. 2.
Fig. 3B is a perspective view of the bracket holding the wireless charger without the rest of the vehicle.
Fig. 3C is an underside view of the bracket holding the charger.
Fig. 4A is a side view of the bracket relative to the high voltage.
Fig. 4B is a perspective view of the high voltage cable relative to the slot within the high voltage bracket.

Corresponding reference numerals indicate corresponding parts throughout the several views of the drawings.

### DETAILED DESCRIPTION

Example embodiments will now be described more fully with reference to the accompanying drawings.

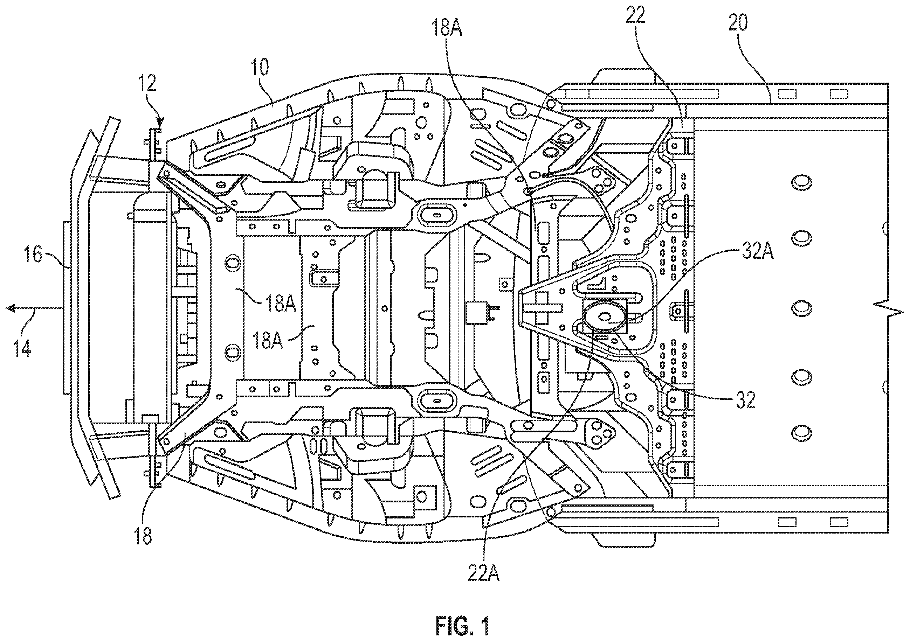

Referring now to Fig. 1, the underside of a vehicle 10 front end 12 is illustrated. The vehicle has a longitudinal axis 14. A front impact impacts a bumper 16 that is disposed generally laterally across the vehicle 10corresponding to the direction of the longitudinal axis 14. The vehicle 10 has a front cradle 18 that extends both rearwardly and laterally across a portion of the front end 12 of the vehicle 10. The cradle 18 has at least one cross member 18A that extends laterally across the vehicle 10. In this example, three cross members are set forth. A battery pack 20 is disposed towards the middle of the vehicle. A skid plate 22 is also illustrated. The skid plate 22 has an opening 22A that is aligned with charging coils 32A of charger 32.

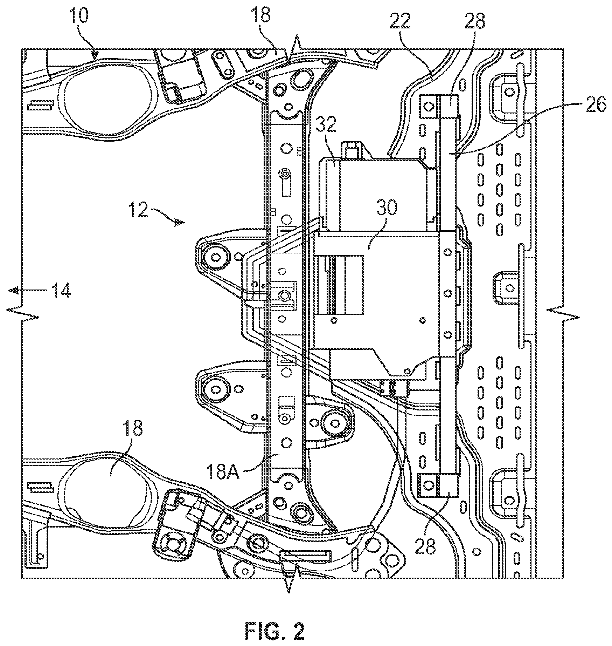

Referring now to Fig. 2, an enlarged version of the front end 12 of the vehicle 10 is illustrated from the topside of the vehicle 10. In this example, a bracket 30 is disposed longitudinally relative to the vehicle 10. The bracket 30 is coupled to the cross member 18A of the front cradle 18 and the battery skid plate 22. The bracket 30 is between the cross member 18A and the skid plate 22 which is the lowermost component. In this example, the skid plate 22 has a brace 26. Mounts 28 mount the brace 26 to the skid plate 22. The bracket 30 may be directly mounted to the skid plate 22 or indirectly mounted through the brace 26. In the present example the bracket 30 is a monolithic structure mounted to both the skid plate 22 and the cross member 18A. The bracket 30 is used for holding a wireless charger 32 to the skid plate 22.

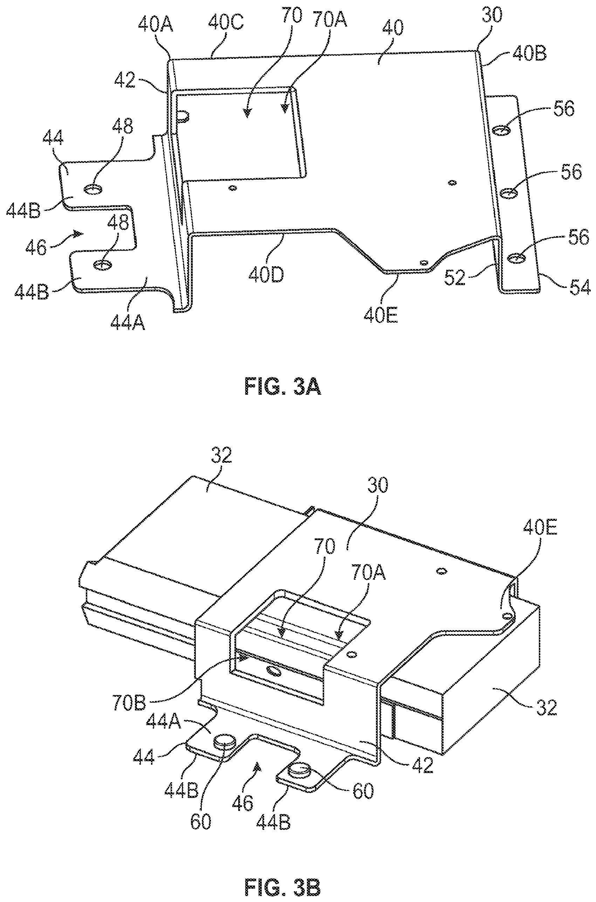

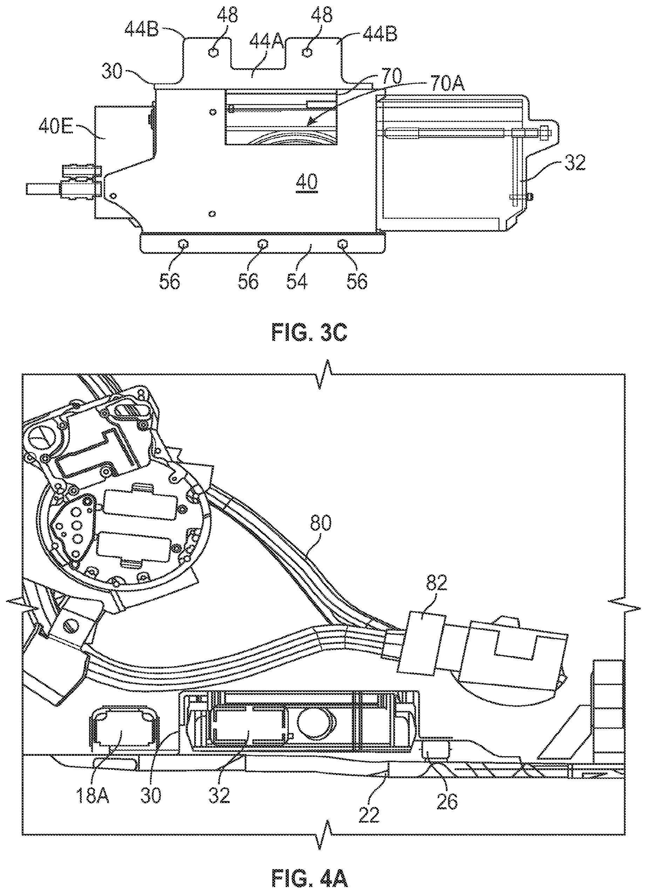

Referring now also to Figs. 3A, 3B and 3C, the bracket 30 is described in further detail. The bracket 30 holds the wireless charger 32 securely in place relative to the skid plate 22 and therefore the vehicle 10. The bracket 30, in this example, is a unitary or monolithic structure. The bracket 30 has a base 40 which, in this example, is disposed generally parallel to the plane of the road surface on which the vehicle 10 travels. The base 40 is the topmost side relative to the vehicle 10. The base 40 has a plurality of edges 40A, 40B, 40C and 40D. The edges 40A and 40B extend laterally relative to the vehicle 10 and are on opposite sides of the base 40. Edges 40A and 40B are linear. Edge 40C runs longitudinally relative to the vehicle 10 and is also a straight edge. Edge 40D also extends generally longitudinally relative to the vehicle. However, the base 40 has an extension portion 40E around which the edge 40D is contoured. The extension 40E is used to secure the wireless charger 32 relative to the vehicle 10.

A first wall 42 is disposed across the edge 40A relative to the bracket 30. The wall 42, in this example, is generally perpendicular to the base 40. The wall 42 has a height to accommodate the thickness of the wireless charger 32. The first wall 42 has a flange 44 extending therefrom. The flange 44 is generally parallel to the base 40 in this example. Of course, other angles may be provided between the base 40 and the flange 44. The flange 44 has a lateral portion 44A (a rectangular flange portion) from which a pair of longitudinal portions 44B or extensions extend therefrom. The longitudinal portions 44B are spaced apart by a gap 46. The longitudinal portions 44B have fasteners openings 48 through which fasteners are used to hold the flange 44 to a cross member 18A of the front cradle 18.

The edge 40B of the base 40 has a second wall 52 that is disposed perpendicular to the base 40. The second wall 52 in this example is solid and extends laterally from the edge 40B. The height of the wall 52 accommodates the charger 32. A flange 54 extends longitudinally from the second wall 52. The flange 54, in this example, is rectangular in shape and has three fastener openings 56 therethrough. The fastener openings 56 are used for receiving fasteners for coupling the flange 54 to the skid plate 22.

Referring now also to Fig. 3B, fasteners 60 are illustrated within the openings 48 of Fig. 3A. The fasteners 60 may be one of many types of bolts such as a M8. The openings 56 in the flange 54 may also be used for receiving M8 bolts. A slot 70 is disposed at least partially in the base 40. In this example, the slot 70 has a first portion 70A and a second portion 70B. In this example, the slot 70 is in a longitudinal direction with a portion of the edge 40A removed. The slot is generally rectangular in shape both in the plane of the base 40 as well as in the vertical direction in the wall and within the plane of the wall 42. By removing the material of the bracket 30 to form the slot 70, the clearance for frontal impacts is improved. The bracket 30 is a monolithic structure having the base 40, the walls 42, 52, the flanges 44, 54, the lateral portions 44A and the longitudinal portions 44B.

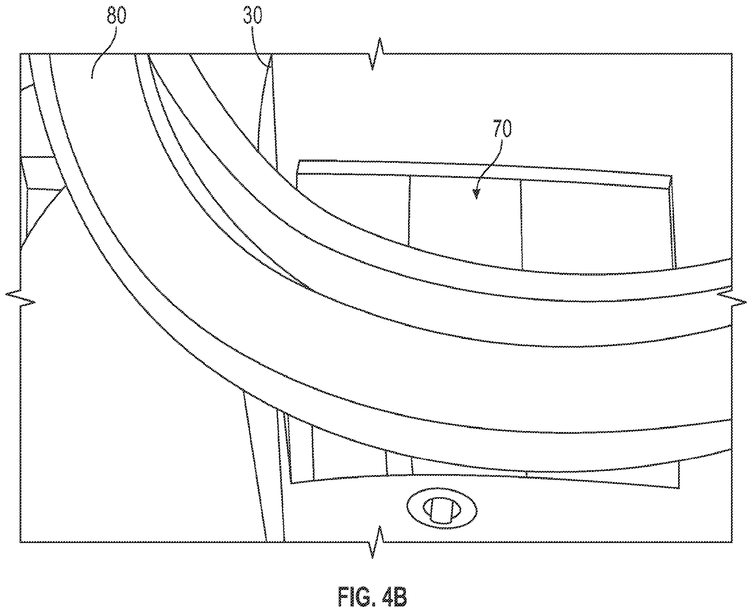

Referring now to Figs. 4A and 4B, a high voltage cable 80 is illustrated with a connector 82. The high voltage cable 80 and the connector 82 are illustrated relative to the bracket 30 and the wireless charger 32. The bracket 30 and the high voltage cables are shown in an at rest position. However, during a crash event, the cable 80 has more clearance due to the slot 70 formed within the bracket 30 as illustrated best in Fig. 4B.

The wireless charger 32 may be provided as an after market product. The previous skid plate may be removed and the bracket 30 and wireless charger inserted therein. The original skid plate may be replaced with skid plate 22 if no opening 22A has been provided in the original skid plate. However, if the original skid plate has an opening 22A, it is placed so that the bracket is coupled between the skid plate 22 and the cross member 18A.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. 1steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A bracket for a vehicle comprising:
a base having a first edge and a second edge opposite the first edge;
the first edge has a first wall extending therefrom;
the second edge has a second wall extending therefrom; and
a first flange extending from the first wall and a second flange extending from the second wall; and
a slot having first portion disposed through the first wall and a second portion disposed in the second wall.

2. The bracket of claim 1 wherein the first wall is perpendicular to the base.

3. The bracket of claim 1 wherein the second wall is perpendicular to the base.

4. The bracket of claim 1 wherein the first flange comprises a pair of extensions extending longitudinally.

5. The bracket of claim 1 wherein the second flange comprises a plurality of openings.

6. The bracket of claim 1 wherein the first flange and the second flange extend longitudinally relative to the vehicle.

7. The bracket of claim 1 wherein the first flange comprises a first extension and a second extension spaced apart by a gap.

8. The bracket of claim 7 wherein the first extension and the second extension are coupled to a rectangular flange portion.

9. The bracket of claim 1 wherein the slot is rectangular.

10. The bracket of claim 1 wherein the first portion of the slot and the second portion of the slot is rectangular.

11. The bracket of claim 1 wherein the base the first wall the second wall the first flange and the second flange are monolithic.

12. A vehicle comprising:
the bracket according to any of the preceding claims;
a front cradle comprising a cross member;
a skid plate;
the first flange coupled to the cross member; and
the second flange coupled to the skid plate.

13. The vehicle of claim 12 wherein the bracket is longitudinally disposed relative to the vehicle.

14. The vehicle of claim 12 wherein a first set of fasteners couple the first flange to the cross member and a second set of fasteners couple the flange to the skid plate.

15. The vehicle of claim 12 wherein the first flange and the second flange extend laterally relative to the vehicle and extend longitudinally from the first wall and the second wall, respectively.
